# EUROPEAN PATENT SPECIFICATION

(11) **EP 2 190 944 B1**
(45) Date of publication and mention of the grant of the patent: **22.06.2011**
(21) Application number: 08806438.1
(22) Date of filing: 26.09.2008
(51) Int. Cl.: C09K 11/56, C09K 11/54, C09K 11/70, C09K 11/88, C09K 11/60, C09K 11/02

(54) **CORE SHELL NANOPARTICLES AND PREPARATION METHOD THEREOF**
KERN-HÜLLE-NANOPARTIKEL UND HERSTELLUNGSVERFAHREN DAFÜR
PARTICULES DE TYPE NOYAU-ENVELOPPE ET SON PROCÉDÉ DE PRÉPARATION

(30) Priority: 28.09.2007 GB 0719073; 28.09.2007 GB 0719075; 18.10.2007 US 980946 P
(43) Date of publication of application: 02.06.2010
(60) Divisional application: 11002502.0
(73) Proprietor: Nanoco Technologies Limited, Manchester M13 9NT (GB)
(72) Inventor: PICKETT, Nigel, London CR0 6JQ (GB); DANIELS, Steven, Matthew, Manchester M13 0YS (GB); MUSHTAQ, Imrana, Manchester M21 0BW (GB)
(74) Representative: Dauncey, Mark Peter
(86) International application number: PCT/GB2008/003288
(87) International publication number: WO 2009/040553

(56) References cited:
- WO-A1-2007/001098
- WO-A1-2007/059630
- WO-A2-2007/060591
- DE-A1- 10 164 768
- DE-A1-102005 018 452
- US-A1- 2006 204 438
- US-A1- 2007 056 401
- US-A1- 2007 104 865
- US-A1- 2007 110 816
- US-A1- 2007 184 975
- US-A1- 2007 202 333
- US-B1- 6 984 369
- NEDELJKOVIC J M ET AL: "Growth of InP Nanostructures via Reaction of Indium Droplets with Phosphide Ions: Synthesis of InP Quantum Rods and InP -TiO2 Composites" JOURNAL OF THE AMERICAN CHEMICAL SOCIETY, AMERICAN CHEMICAL SOCIETY, WASHINGTON, DC.; US, US, vol. 126, no. 8, 3 March 2004 (2004-03-03), pages 2632-2639, XP002465603 ISSN: 0002-7863
- AN SUNG JIN ET AL: "Heteroepitaxal fabrication and structural characterizations of ultrafine GaN/ZnO coaxial nanorod heterostructures" APPLIED PHYSICS LETTERS, AIP, AMERICAN INSTITUTE OF PHYSICS, MELVILLE, NY, US, vol. 84, no. 18, 3 May 2004 (2004-05-03), pages 3612-3614, XP012061326 ISSN: 0003-6951
- DESHENG WANG ET AL: "Superparamagnetic Fe2O3 beads-CdSe/ZnS quantum dots core-shell nanocomposite particles for cell separation" NANO LETTERS, ACS, WASHINGTON, DC, US, vol. 4, no. 3, 1 March 2004 (2004-03-01), pages 409-413, XP008101073 ISSN: 1530-6984 [retrieved on 2004-01-24]
- CHUNG Y C ET AL: "Phosphorylcholine-protected nanoparticles functionalized with both magnetic and photoluminescence properties" NSTI NANOTECH 2005, NSTI NANOTECHNOLOGY CONFERENCE AND TRADE SHOW, ANAHEIM, CA, UNITED STATES, MAY 8-12, 2005, NSTI, CAMBRIDGE, MASS, vol. 1, 8 May 2005 (2005-05-08), pages 320-323, XP008100925 ISBN: 978-0-9767985-0-7
- CHUNG Y C ET AL: "Preparation and characterization of biocompatible nanoparticles with magnetic and photoluminescent properties" TRANSACTIONS ; 7TH WORLD BIOMATERIALS CONGRESS (TRANSACTIONS - 7TH WORLD BIOMATERIALS CONGRESS - 20040517 TO 20040521 - SYDNEY),, 17 May 2004 (2004-05-17), page 1735, XP008100952 ISBN: 978-1-877040-19-1
- HU ET AL: "Sonochemical synthesis of ferromagnetic core-shell Fe3O4-FeP nanoparticles and FeP nanoshells" CHEMICAL PHYSICS LETTERS, NORTH-HOLLAND, AMSTERDAM, vol. 428, no. 4-6, 20 September 2006 (2006-09-20), pages 343-347, XP005630841 ISSN: 0009-2614
- DATABASE WPI Section Ch, Week 200779 Thomson Scientific, London, GB; Class E32, AN 2007-851322 XP002525161 ITO K; KUZUTANI T; SUMIYAMA K: "Zinc oxide nanoparticle synthesis, e.g. for making optical function material, and electronic device, by mixing acid base surface active agent with zinc alkyl carboxylate salt, and heating the mixture in high boiling point alcohol solvent" -& JP 2007 204289 A (UNIV NAGOYA) 16 August 2007 (2007-08-16)

## Description

The present invention relates to semiconductor nanoparticles.

There has been substantial interest in the preparation and characterisation of compound semiconductors comprising particles with dimensions, for example in the range 2-50 nm, often referred to as 'quantum dots' or nanocrystals. These studies have occurred mainly due to the size-tuneable electronic properties of these materials that can be exploited in many commercial applications such as optical and electronic devices and other applications that now range from biological labelling, solar cells, catalysis, biological imaging, light-emitting diodes, general space lighting and both electroluminescence and photoluminescence displays amongst many new and emerging applications.

The most studied of semiconductor materials have been the chalcogenide II-VI (i.e. group 12 - group 16) materials, such as ZnS, ZnSe, CdS, CdSe and CdTe. Most noticeably, CdSe has been greatly studied due to its optical tuneability over the visible region of the spectrum. Although some earlier examples appear in the literature, more recently, reproducible methods have been developed from "bottom up" techniques, whereby particles are prepared atom-by-atom using "wet" chemical procedures.

Two fundamental factors, both related to the size of the individual semiconductor nanoparticle, are responsible for the unique properties of these particles. The first is the large surface-to-volume ratio: as a particle becomes smaller, the ratio of the number of surface atoms to those in the interior increases. This leads to the surface properties playing an important role in the overall properties of the material. The second factor is that, with semiconductor nanoparticles, there is a change in the electronic properties of the material with size, moreover, the band gap gradually becoming larger because of quantum confinement effects as the size of the particles decreases. This effect is a consequence of the confinement of an 'electron in a box' giving rise to discrete energy levels similar to those observed in atoms and molecules, rather than a continuous band as in the corresponding bulk semiconductor material. Thus, for a semiconductor nanoparticle, because of the physical parameters, the "electron and hole", produced by the absorption of electromagnetic radiation (a photon) with energy greater then the first excitonic transition, are closer together than in the corresponding macrocrystalline material, so that the Coulombic interaction cannot be neglected. This leads to a narrow bandwidth emission, which is dependent upon the particle size and composition. Thus, quantum dots have higher kinetic energy than the corresponding macrocrystalline material and consequently the first excitonic transition (band gap) increases in energy with decreasing particle diameter.

Single core semiconductor nanoparticles, which consist of a single semiconductor material along with an outer organic passivating layer, can have relatively low quantum efficiencies due to electron-hole recombination occurring at defects and dangling bonds situated on the nanoparticle surface which lead to non-radiative electron-hole recombinations.

One method to eliminate defects and dangling bonds is to grow a second inorganic material, having a wider band-gap and small lattice mismatch to that of the core material epitaxially on the surface of the core particle, to produce a "core-shell" particle. Core-shell particles separate any carriers confined in the core from surface states that would otherwise act as non-radiative recombination centres. One example is ZnS grown on the surface of a CdSe core to provide a CdSe/ZnS core/shell nanoparticle.

Another approach is to prepare a core/multi-shell structure where the "electron-hole" pair is completely confined to a single shell layer such as the quantum dot-quantum well structure. Here, the core is of a wide bandgap material, followed by a thin shell of narrower bandgap material, and capped with a further wide bandgap layer, such as CdS/HgS/CdS grown using a substitution of Hg for Cd on the surface of the core nanocrystal to deposit just a few monolayers of HgS. The resulting structures exhibited clear confinement of photo-excited carriers in the HgS layer.

The coordination about the final inorganic surface atoms in any core, core-shell or core-multi shell nanoparticle is incomplete, with highly reactive non-fully coordinated atoms "dangling bonds" on the surface of the particle, which can lead to particle agglomeration. This problem is overcome by passivating (capping) the "bare" surface atoms with protecting organic groups.

The outermost layer (capping agent) of organic material or sheath material helps to inhibit particle aggregation and also further protects the nanoparticle from their surrounding chemical environment and it also provide a means of chemical linkage to other inorganic, organic or biological material. In many cases, the capping agent is the solvent that the nanoparticle preparation is undertaken in, and consists of a Lewis base compound, or a Lewis base compound diluted in an inert solvent, such as a hydrocarbon, whereby there is a lone pair of electrons that are capable of donor type coordination to the surface of the nanoparticle.

Important issues concerning the synthesis of high quality semiconductor nanoparticles are particle uniformity, size distribution, quantum efficiencies and for use in commercial applications their long-term chemical and photostability. Early routes applied conventional colloidal aqueous chemistry, with more recent methods involving the kinetically controlled precipitation of nanocrystallites, using organometallic compounds. Most of the more recent methods are based on the original "nucleation and growth" method described by Murray, Norris and Bawendi¹, but use other precursors from that of the organometallic ones originally used, such as oxides (e.g. CdO), carbonates (e.g. MCO₃), acetates (e.g. M(CH₃CO₂)) and acetylacetanates (e.g. M[CH₃COOCH=C(C-)CH₃]₂) in which, for example, M = Cd or Zn.

Murray *et al*¹ originally used organometallic solutions of metal-alkyls (R₂M) where M = Cd, Zn, Te; R = Me, Et and tri-*n*-octylphosphine sulfide/selenide (TOPS/Se) dissolved in tri-*n*-octylphosphine (TOP). These precursor solutions are injected into hot tri-*n*-octylphosphine oxide (TOPO) in the temperature range 120-400°C depending on the material being produced. This produces TOPO coated/capped semiconductor nanoparticles of II-VI material. The size of the particles is controlled by the temperature, capping agent, concentration of precursor used and the length of time at which the synthesis is undertaken, with larger particles being obtained at higher temperatures, higher precursor concentrations and prolonged reaction times. This organometallic route has advantages over other synthetic methods, including greater monodispersity and high particle cystallinity. As mentioned, many variations of this method have now appeared in the literature which routinely give good quality core and core-shell nanoparticles in terms of both monodispersity and quantum yield.

Single-source precursors have also proved useful in the synthesis of semiconductor nanoparticle materials of II-VI, as well as other, compound semiconductor nanoparticles. Bis(dialkyldithio-/diseleno-carbamato)cadmium(II) / zinc(II) compounds, M(E₂CNR₂)₂ (where M = Zn or Cd, E = S or Se and R = alkyl), have been used in a similar 'one-pot' synthetic procedure, which involved dissolving the precursor in tri-*n*-octylphosphine (TOP) followed by rapid injection into hot tri-*n-*octylphosphine oxide/tri-*n*-octylphosphine (TOPO/TOP) above 200 °C.

Fundamentally all of the above procedures rely on the principle of high temperature particle nucleation, followed by particle growth at a lower temperature. Moreover, to provide a monodispersed ensemble of nanoparticles in the 2 - 10nm range there must be proper separation of nanoparticle nucleation from nanoparticle growth. This is achieved by rapid injection of a cooler solution of one or both precursors into a hotter coordinating solvent (containing the other precursor if otherwise not present) which initiates particle nucleation. The sudden addition of the cooler solution upon injection subsequently lowers the reaction temperature (the volume of solution added is typically about 1/3 of the total solution) and inhibits further nucleation. Particle growth (being a surface catalyzed process or via Ostwald ripening depending on the precursors used) continues to occur at the lower temperature, thus nucleation and growth are separated which yields a narrow nanoparticle size distribution. This method works well for small-scale synthesis where one solution can be added rapidly to another while keeping a reasonably homogenous temperature throughout the reaction. However, on the larger preparative scales needed for commercial applications, whereby large volumes of solution are required to be rapidly injected into one another, a significant temperature differential can occur within the reaction mixture which can subsequently lead to an unacceptably large particle size distribution.

Cooney and co-workers² used a II-VI molecular cluster, [S₄Cd₁₀(SPh)₁₆] [Me₃NH]₄, to produce II-VI nanoparticles of CdS, which also involved the oxidation of surface-capping SPh⁻ ligands by iodine. This preparative route involved the fragmentation of the majority of the II-VI clusters into ions which were consumed by the remaining II-VI ([S₄Cd₁₀(SPh)₁₆]⁴⁻) clusters which subsequently grew into II-VI nanoparticles of CdS.

Strouse and co-workers³ used a similar synthetic approach using II-VI clusters to grow II-VI nanoparticles, but employed thermolysis (lyothermal) rather than a chemical agent to initiate particle growth. Moreover, the single-source precursors ([M₁₀Se₄(SPh)₁₆][X]₄ where X = Li⁺ or (CH₃)₃NH⁺, and M = Cd or Zn) were thermolysised, whereby fragmentation of some clusters occurred followed by particle growth from scavenging of the free M and Se ions, or simply from clusters aggregating together to form, initially, larger clusters, then small nanoparticles, and ultimately, larger nanoparticles.

Both of the Cooney² and Strouse³ methods employed molecular clusters to grow nanoparticles, but used ions from the clusters to grow the larger nanoparticles, either by fragmentation of some clusters or cluster aggregation. In neither case was a separate nanoparticle precursor composition used to provide the ions required to grow the larger nanoparticle on the original molecular cluster. Moreover, neither the Cooney² nor Strouse³ methods retained the structural integrity of the original individual molecular clusters in the final nanoparticles. Furthermore, it can be seen that both of these methods are limited to forming a II-VI nanoparticle using a II-VI cluster, which is an inevitable consequence of the fact that these methods are limited to using the material of the molecular clusters to build the larger nanoparticles. The Cooney² and Strouse³ work is therefore limited in terms of the range of possible materials that can be produced using their methodology.

The applicant's published international patent applications, PCT/GB2005/001611 and PCT/GB2006/004003, describe methods of producing large volumes of high quality mono-dispersed quantum dots, which overcome many of the problems associated with earlier small-scale methods. Chemical precursors are provided in the presence of a molecular cluster compound under conditions whereby the integrity of the molecular cluster is maintained and in that way acts as a well-defined prefabricated seed or template to provide nucleation centres that react with the chemical precursors to produce high quality nanoparticles on a sufficiently large scale for industrial application.

Identical molecules of the cluster compound act as seeds or nucleation points upon which nanoparticle growth is initiated. In this way, a high temperature nucleation step is not necessary to initiate nanoparticle growth because suitable well-defined nucleation sites are already provided in the system by the molecular clusters. The molecules of the cluster compound act as a template to direct nanoparticle growth. 'Molecular cluster' is a term, which is widely understood in the relevant technical field, but for the sake of clarity, should be understood herein to relate to clusters of 3 or more metal atoms and their associated ligands of sufficiently well defined chemical structure such that all molecules of the cluster compound possess the same relative molecular formula. Thus the molecular clusters are identical to one another in the same way that one H₂O molecule is identical to another H₂O molecule. By providing nucleation sites which are so much more well defined than the nucleation sites employed in earlier methods, the use of the molecular cluster compound can provide a population of nanoparticles that are essentially monodispersed. A further significant advantage of this method is that it can be more easily scaled-up. Methods of producing suitable molecular cluster compounds are known within the art, examples of which can be found at the Cambridge Crystallographic Data Centre (www.ccdc.ca.ac.uk).

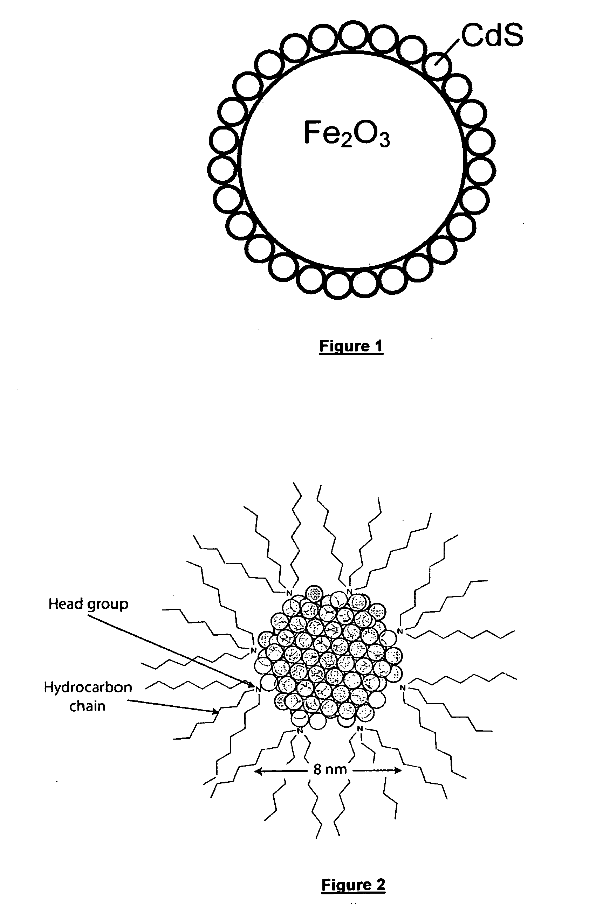

There is great interest in bi-functional and multi-functional nano-scale materials. While a few examples of such materials are known, such as nanoparticles of different compositions fused together to form heterostructures of interlinked nanoparticles (see Figure 1), there are still relatively few reports of the successful fabrication and exploitation of such materials.

An Sung Jin et al. (Applied Physics Letters, AIP, Americal Institute of Physics, Melville, NY, US, vol. 84, no. 18, 3 May 2004, pages 3612-3614) report the heteroepitaxial fabrication and structural characterisations of ultrafine GaN/ZnO coaxial nanorod heterostructures. The structures were fabricated by epitaxial growth of a GaN layer on ultrafine ZnO nanorods. WO 2007/001098 describes the fabrication of nanostructures comprising a core nanorod surrounded by a nano shell. The core nanorod includes a first nanorod of a first conductivity type: an (Alₓ In_{y} Ga _{1-x-y})N (where 0<x<1, 0≤y≤1 and 0≤x+y≤1) quantum well, and a second nanorod of a second conductivity type, which are joined in a longitudinal direction. The nano shell is formed of a material with a bandgap greater than that of the quantum well. US 2007/184975 discloses a photocatalyst having a matrix which comprises a substrate of silicon, glass, quartz, Pyrex, sapphire or plastic and formed on the substrate an oxide-based nanomaterial having a shape of a nanoneedle, nanorod or nanotube. US 2007/0110816 describes a method of coating nanoparticles with a metal oxide by substituting surfaces of hydrophobic nanoparticles with an organic substance having a hydrophilic group, and injecting the hydrophilic nanopartices and a precursor of the metal oxide into an organic solvent including an amphiphilic surfactant to coat the nanoparticles with the metal oxide. Exemplary methods employ II-VI-VI core materials and coatings containing a group IV metal oxide of either silicon or tin.

An aim of the present invention is to provide nanoparticle materials exhibiting increased functionality. A further aim of the present invention is to provide nanoparticles that are more robust and/or exhibit enhanced optical properties.

A first aspect of the present invention provides a quantum dot nanoparticle comprising a core comprised of a first material and a layer comprised of a second material, wherein the first material is a semiconductor material incorporating ions from group 13 and group 15 of the periodic table and the second material is a metal oxide material incorporating metal ions selected from group 12 of the periodic table.

A second aspect of the present invention provides a method for producing a quantum dot nanoparticle comprising a core comprised of a first material and a layer comprised of a second material, wherein the first material is a semiconductor material incorporating ions from group 13 and group 15 of the periodic table and the second material is a metal oxide material incorporating metal ions selected from group 12 of the periodic table, the method comprising forming said core comprised of said first material and forming the layer comprised of said second material.

The first and second aspects of the present invention provide semiconductor/metal oxide core/shell quantum dots and related materials, and methods for producing the same. The invention provides semiconductor-metal oxide quantum dot nanoparticle materials within the size range 2-100nm. The nanoparticle materials according to the first aspect of the present invention may be more robust than non-metal oxide containing nanoparticles to their surrounding chemical environment, and in some cases have additional properties that are required in many commercial applications such as paramagnetism.

The nanoparticle core comprises the III-V semiconductor material and the outer shell or at least one of the outer shells (where more than one is provided) comprises the metal oxide material.

In a preferred embodiment the metal oxide material is provided as a layer between an inner inorganic core comprised of the III-V semiconductor material and an outermost organic capping layer.

A number of metal and metal oxide precursors may be employed to form a shell comprising a metal oxide material, in which the metal is taken from group 12 of the periodic table, grown on a semiconductor nanoparticle core or core/shell resulting in a quantum dot/metal oxide core/shell nanoparticle, a quantum dot inorganic core and shell provided with an outer metal oxide layer, or a core/multi-shell quantum dot provided with an outer metal oxide shell. The outer metal oxide layer may enhance the photo and chemical stability of the nanoparticle and may therefore render the nanoparticle resistant to fluorescence quenching and/or resistance to its surrounding chemical environment. By using an oxide as the outer layer, if the nanoparticles reside in an oxygen-containing environment, very little or no further oxidation should occur.

In preferred embodiments of the present invention there are provided core/shell and core/muttishell nanoparticles comprising a quantum dot core and metal oxide shell, in which the metal is taken from group 12 of the periodic table, or a quantum dot core/shell structure with an outer metal oxide shell, in which the metal is taken from groups 12 of the periodic table. The combination of the luminescence of the core and metal oxide shell are ideal for use in applications such as biological, displays, lighting, solar cells and contrast imaging. The preparation of core/shell semiconductor nanoparticles with an outer layer of metal oxide, in which the metal is taken from group 12 of the periodic table, improves the luminescent properties of the semiconductor core material and makes them more stable against their surrounding chemical environment i.e. reduces photo-oxidation at the surface or interface of the materials. This enhanced stability and is fundamental for many commercial applications. There is also the added desirability of the particles being bi-functional, in some cases, i.e. having both luminescence and paramagnetic properties.

With regard to the method forming the second aspect of the present invention formation of said core preferably comprises effecting conversion of a nanoparticle core precursor composition to the material of the nanoparticle core. Said nanoparticle core precursor composition preferably comprises first and second core precursor species containing the ions to be incorporated into the growing nanoparticle core.

It is preferred that said first and second core precursor species are separate entities contained in said core precursor composition, and that said conversion is effected in the presence of a molecular cluster compound under conditions permitting seeding and growth of the nanoparticle core.

In a further preferred embodiment said first and second core precursor species are combined in a single entity contained in said core precursor composition.

Formation of the layer comprised of the second material preferably comprises effecting conversion of a second material precursor composition to said second material. The second material precursor composition may comprise third and fourth ions to be incorporated into the layer comprised of the second material. The third and fourth ions may be separate entities contained in the second material precursor composition, or may be combined in a single entity contained in the second material precursor composition.

The first material is the semiconductor material incorporating ions from groups 13 and 15 of the periodic table and the second material is the metal oxide, in which the metal is taken from group 12 of the periodic table. Preferably the second material precursor composition comprises the metal ions and the oxide ions to be incorporated into the layer comprised of the metal oxide. The second material precursor composition may contain a metal carboxylate compound comprising metal ions to be incorporated into the layer comprised of the metal oxide material and said conversion may comprise reacting said metal carboxylate compound with an alcohol compound. Preferably the metal is selected from group 12 (IIB) of the periodic table, and is most preferably zinc.

With regard to the second aspect of the present invention the carboxylate moiety of the metal carboxylate compound preferably comprises 2 to 6 carbon atoms, and is most preferably a metal acetate compound. The alcohol may be a C₆-C₂₄ linear or branched alcohol compound, more preferably a linear saturated C₁₂-C₂₀ alcohol, and most preferably an alcohol selected from the group consisting of 1-heptadecanol, 1-octadecanol and 1-nonadecanol. It is preferred that the reaction of the metal carboxylate compound and the alcohol yields said metal oxide material that is comprised in said nanoparticle layer.

With regard to the second aspect of the present invention the metal is selected from group 12 of the periodic table, in which case it is preferred that the metal is zinc.

The first two aspects of the present invention are directed to the preparation of quantum dot nanoparticulate materials incorporating a III-V semiconductor material (that is, a semiconductor material incorporating ions from groups 13 and 15 of the periodic table) and certain metal oxide materials within the size range 2-100 nm.

The III-V semiconductor material is comprised in the core of the nanoparticles, and may be provided in one or more of the outer shells or layers of material formed on the nanoparticle core.

The III-V semiconductor material may incorporate group 13 ions selected from the group consisting of boron, aluminium, gallium and indium; and/or group 15 ions selected from the group consisting of phosphide, arsenide and nitride.

The same or a different semiconductor material may form one or more shell layers around the nanoparticle core, subject to the proviso that the nanoparticle material also incorporates a material that is an oxide of a metal.

The nanoparticle of the first aspect of the present invention may further comprise a non-III-V semiconductor material. The non-III-V semiconductor material may incorporate ions selected from at least one of groups 2 to 16 of the periodic table. The non-III-V semiconductor material is preferably used in one or more shells or layers grown on the nanaparticle core and in most cases will be of a similar lattice type to the material in the immediate inner layer upon which the non-III-V material is being grown, i.e. have close lattice match to the immediate inner material so that the non-III-V material can be epitaxially grown, but is not necessarily restricted to materials of this compatibility.

The non-III-V semiconductor material may incorporate ions from group 2 (IIA) of the periodic table, which may be selected from the group consisting of magnesium, calcium and strontium. The non-III-V semiconductor material may incorporate ions from group 12 (IIB) of the periodic table, such as ions selected from the group consisting of zinc, cadmium and mercury. The non-III-V semiconductor material may incorporate ions from group 14 (IVB), such as lead or tin ions. The non-III-V semiconductor material may incorporate ions from group 16 (VIB) of the periodic table. For example, ions selected from the group consisting of sulfur, selenium and telerium. The non-III-V semiconductor material may incorporate ions from group 14 of the periodic table, by way of example, carbide ions. The non-III-V semiconductor material may incorporate ions selected from the group consisting of ions from the transition metal group of the periodic table or ions from the d-block of the periodic table. The non-III-V semiconductor material may incorporate ions from group 13 (IIIB), for example, ions selected from the group consisting of boron, aluminium, gallium and indium, or ions from group 15 (VB) of the periodic table, such as ions selected from the group consisting of phosphide, arsenide and nitride, subject to the proviso that the non-III-V does not incorporate ions from both group 13 and group 15.

A buffer layer comprised of a third material may be grown on the outside of the core, between the core and the shell if, for example the two materials, core and shell, are incompatible or not sufficiently compatible to facilitate acceptable growth of the layer comprised of the second material on the core comprised of the first material. The third material is preferably a semiconductor material incorporating ions from at least one of groups 2 to 16 of the periodic table. The third material may incorporate any of the ions set out above in respect of the non-III-V semiconductor ions and may also include ions from both group 13 and group 15 of the periodic table in any desirable combination.

The non-III-V semiconductor material and/or buffer layer of semiconductor material may comprise:
IIA-VIB (2-16) material incorporating a first element from group 2 of the periodic table and a second element from group 16 of the periodic table and also including ternary and quaternary materials and doped materials. Nanoparticle semiconductor materials include but are not restricted to: MgS, MgSe, MgTe, CaS, CaSe, CaTe, SrS, SrSe, SrTe.
IIB-VIB (12-16) material incorporating of a first element from group 12 of the periodic table and a second element from group 16 of the periodic table and also including ternary and quaternary materials and doped materials. Nanoparticle semiconductor materials include but are not restricted to: ZnS, ZnSe, ZnTe, CdS, CdSe, CdTe, HgS, HgSe, HgTe.
II-V material incorporating a first element from group 12 of the periodic table and a second element from group 15 of the periodic table and also including ternary and quaternary materials and doped materials. Nanoparticle semiconductor materials include but are not restricted to: Zn₃P₂, Zn₃As₂, Cd₃P₂, Cd₃As₂, Cd₃N₂, Zn₃N₂.
III-IV material incorporating a first element from group 13 of the periodic table and a second element from group 14 of the periodic table and also including ternary and quaternary materials and doped materials. Nanoparticle semiconductor materials include but are not restricted to: B₄C, Al₄C₃, Ga₄C.
III-VI material incorporating a first element from group 13 of the periodic table and a second element from group 16 of the periodic table and also including ternary and quaternary materials. Nanoparticle semiconductor materials include but are not restricted to: Al₂S₃, Al₂Se₃, Al₂Te₃, Ga₂S₃, Ga₂Se₃,; In₂S₃, In₂Se₃, Ga₂Te₃, In₂Te₃.
IV-VI material incorporating a first element from group 14 of the periodic table and a second element from group 16 of the periodic table and also including ternary and quaternary materials and doped materials. Nanoparticle semiconductor materials include but are not restricted to: PbS, PbSe, PbTe, SnS, SnSe, SnTe.

Nanoparticle material incorporating a first element from any group in the transition metal of the periodic table, and a second element from any group of the d-block elements of the periodic table and also including ternary and quaternary materials and doped materials. Nanoparticle semiconductor materials include but are not restricted to: NiS, CrS, GulnS₂.

In addition to the above materials, the buffer layer may also comprise:
III-V material incorporating a first element from group 13 of the periodic table and a second element from group 15 of the periodic table and also including ternary and quaternary materials and doped materials. Nanoparticle semiconductor materials include but are not restricted to: BP, AlP, AlAs, AlSb; GaN, GaP, GaAs, GaSb; InN, InP, InAs, InSb, AlN, BN.

Concerning the first aspect of the present invention the metal oxide material(s) comprised in any number of shell layers is an oxide of a metal taken from group 12 of the periodic table.

In a preferred embodiment the metal is selected from the group consisting of zinc, cadmium and mercury. It is particularly preferred that the metal is zinc.

In a preferred embodiment of the first aspect of the present invention the nanoparticle comprises a core of indium phosphide and a shell of zinc oxide grown on said core. The nanoparticle is preferably formed by growing a core of indium phosphide on a II-VI semiconductor cluster, such as zinc sulfide, and then depositing a shell of zinc oxide by thermal decomposition of a zinc-containing carboxylic acid solution.

Nanoparticles falling within the first aspect of the present invention and formed using a method according to the second aspect of the present invention include not only binary phase materials incorporating two types of ions, but also ternary and quaternary phase nanoparticles incorporating respectively three or four types of ions. It will be appreciated that ternary phase nanoparticles consist of three component materials and quaternary phase nanoparticles consist four-component materials.

Doped nanoparticles refer to nanoparticles of the above type which further incorporate a dopant comprised of one or more main group or rare earth elements, most often a transition metal or rare earth element, such as, but not limited to, Mn⁺ or Cu²⁻.

In preferred methods for the production of nanoparticles according to the above-defined aspect of the present invention a seeding II-VI molecular cluster is placed in a solvent (coordinating or non-coordinating) in the presence of nanoparticle precursors to initiate particle growth. The seeding molecular cluster is employed as a template to initiate particle growth from other precursors present within the reaction solution. The molecular cluster to be used as the seeding agent can either be prefabricated or produced *in-situ* prior to acting as a seeding agent. Some precursor may or may not be present at the beginning of the reaction process along with the molecular cluster, however, as the reaction proceeds and the temperature Is increased, additional amounts of precursors can be added periodically to the reaction either dropwise as a solution or as a solid.

The method concerns the conversion of a nanoparticle precursor composition to a desired nanoparticle. Suitable precursors include single-source precursors in which the two or more ions to be incorporated in to the growing nanoparticle, or multi-source precursors in which two or more separate precursors each of which contains at least one ion to be included in the growing nanoparticle, The total amount of precursor composition required to form the final desired yield of nanoparticles can be added before nanoparticle growth has begun, or alternatively, the precursor composition can be added in stages throughout the reaction.

The conversion of the precursor to the material of the nanoparticles can be conducted in any suitable solvent. It will be appreciated that it is important to maintain the integrity of the molecules of the cluster compound. Consequently, when the cluster compound and nanoparticle precursor are introduced in to the solvent the temperature of the solvent must be sufficiently high to ensure satisfactory dissolution and mixing of the cluster compound (it is not necessary that the present compounds are fully dissolved but desirable), but not so high as to disrupt the integrity of the cluster compound molecules. Once the cluster compound and precursor composition are sufficiently well dissolved in the solvent, the temperature of the solution thus formed is raised to a temperature, or range of temperatures, which is/are sufficiently high to initiate nanoparticle growth but not so high as to damage the integrity of the cluster compound molecules. As the temperature is increased further quantities of precursor are added to the reaction in a dropwise manner or as a solid. The temperature of the solution can then be maintained at this temperature or within this temperature range for as long as required to form nanoparticles possessing the desired properties.

A wide range of appropriate solvents is available. The particular solvent used is usually at least partly dependent upon the nature of the reacting species, i.e. nanoparticle precursor and/or cluster compound, and/or the type of nanoparticles which are to be formed. Typical solvents include Lewis base type coordinating solvents, such as a phosphine (e.g. TOP), a phosphine oxide (e.g. TOPO) an amine (e.g. HDA), a thiol such as octanethiol or non-coordinating organic solvents, e.g. alkanes and alkenes. If a non-coordinating solvent is used then it will usually be used in the presence of a further coordinating agent to act as a capping agent for the following reason.

Since the nanoparticles being formed are intended to function as quantum dots it is important that the surface atoms which are not fully coordinated "dangling bonds" are capped to minimise non-radiative electron-hole recombinations and inhibit particle agglomeration which can lower quantum efficiencies or form aggregates of nanoparticles. A number of different coordinating solvents are known which can also act as capping or passivating agents, e.g. TOP, TOPO, had or long chain organic acids such as myristic acid (tetradecanoic acid), long chain amines (as depicted in Figure 2), functionalised PEG (polyethylene glycol) chains but not restricted to these capping agents.

If a solvent is chosen which cannot act as a capping agent then any desirable capping agent can be added to the reaction mixture during nanoparticle growth. Such capping agents are typically Lewis bases, including mono- or multi- dentate ligands of the type phosphines (trioctylphosphine, triphenolphosphine, *t-*butylphosphine), phosphine oxides (trioctylphosphine oxide), alkyl phosphonic acids, alkyl-amines (e.g. hexadecylamine, octylamine (see Figure 2)), aryl-amines, pyridines, octanethiol, a long chain fatty acid and thiophenes, but a wide range of other agents are available, such as oleic acid and organic polymers which form protective sheaths around the nanoparticles. With reference to Figure 2 in which a tertiary amine containing higher alkyl groups is depicted, the amine head groups should have a strong affinity for the nanocrystals and the hydrocarbon chains help to solubilise and disperse the nanocrystals in the solvent.

The outermost layer (capping agent) of a quantum dot can also consist of a coordinated ligand that processes additional functional groups that can be used as chemical linkage to other inorganic, organic or biological material, whereby the functional group is pointing away from the quantum dot surface and is available to bond/react with other available molecules, such as primary, secondary amines, alcohols, carboxylic acids, azides, hydroxyl group but not limited to. The outermost layer (capping agent) of a quantum dot can also consist of a coordinated ligand that processes a functional group that is polymerisable and can be used to form a polymer around the particle.

The outermost layer (capping agent) can also consist of organic units that are directly bonded to the outermost inorganic layer and can also process a functional group, not bonded to the surface of the particle that can be used to form a polymer around the particle, or for further reactions.

The first aspect of the present invention concerns semiconductor nanoparticles incorporating a III-V semiconductor material and a metal oxide material, in which the metal is taken from group 12 of the periodic table. While the second aspect of the present invention is directed to the production of nanoparticle material in accordance with the first aspect of the present invention.

In a preferred method for producing the nanoparticles according to any of the above-defined aspects of the present invention, molecular clusters, for example, II-VI molecular clusters are employed, whereby the clusters are well defined identical molecular entities, as compared to ensembles of small nanoparticles, which inherently lack the anonymous nature of molecular clusters. II-VI molecular clusters may be used to grow cores comprising II-VI or non-II-VI semiconductor materials (e.g. III-V materials, such as InP) as there is a large number of II-VI molecular clusters that can be made by simple procedures and which are not air and moisture sensitive, as is typically the case with III-V clusters. By using a molecular cluster there is no need for a high temperature nucleation step as in the conventional methods of producing quantum dots, which means large-scale synthesis is possible.

Moreover, it is possible to use a II-VI molecular cluster, such as [HNEt₃]₄[Zn₁₀S₄(SPh)₁₆], to seed the growth of III-V nanoparticle materials such as InP and GaP quantum dots and their alloys. Following addition or formation *in situ* of the II-VI molecular cluster, molecular sources of the III and V ions, "molecular feedstocks", are added and consumed to facilitate particle growth. These molecular sources may be periodically added to the reaction solution so as to keep the concentration of free ions to a minimum whilst maintaining a concentration of free ions to inhibit Ostwald's ripening from occurring and defocusing of nanoparticle size range from occurring.

Nanoparticle growth may be initiated by heating (thermolysis) or by solvothermal means. The term solvothermal shall be used herein to refer to heating in a reaction solution so as to initiate and sustain particle growth and is intended to encompass the processes which are also sometimes referred to as thermolsolvol, solution-pyrolysis, and lyothermal. Particle preparation can also be accomplished by inducing a chemical reaction by changing the reaction conditions, such as adding a base or an acid, elevation of pressures, i.e. using pressures greater than atmospheric pressure, application of electromagnetic radiation, such as microwave radiation or any one of a number of other methods known to the skilled person.

Once the desired nanoparticle cores are formed at least one shell layer is grown on the surface of each core to provide the nanoparticles of the first aspect of the present invention. Any appropriate method may be employed to provide the or each shell layer.

The semiconductor material that is comprised in the nanoparticle core, and which incorporates ions from groups 13 and 15 of the periodic table, and/or the semiconductor material that may be comprised in one or more shells provided on the core may comprise ions selected from at least one of groups 2 to 16 of the periodic table.

The semiconductor material may incorporate ions from group 2 (IIA) of the periodic table, which may be selected from the group consisting of magnesium, calcium and strontium.

The semiconductor material may incorporate ions from group 12 (IIB) of the periodic table, such as ions selected from the group consisting of zinc, cadmium and mercury.

The semiconductor material may incorporate ions from group 13 (IIIB), for example, ions selected from the group consisting of boron, aluminium, gallium and indium. The semiconductor material may incorporate ions from group 14 (IV), such as lead or tin ions. By way of further example, the group 14 ions may be carbide ions.

The semiconductor material may incorporate ions from group 16 (VIB) of the periodic table. For example, ions selected from the group consisting of sulfur, selenium and telerium.

There may be incorporated in the semiconductor material ions from group 15 (VB) of the periodic table, such as ions selected from the group consisting of phosphide, arsenide and nitride.

The semiconductor material may incorporate ions selected from the group consisting of ions from the transition metal group of the periodic table or ions from the d-block of the periodic table.

Nanoparticles according to the above-defined first aspect of the present invention and nanoparticles produced using the method according to the second aspect of the present Invention may further incorporate one or more layers of a metal oxide material selected from the following:

### +1 oxidation state

Silver(I)oxide, Ag₂O;

### +2 oxidation state

Aluminium monoxide, AlO; Barium oxide. BaO; Beryllium oxide, BeO; Cadmium oxide, CdO; Calcium oxide, CaO; Cobalt (II) oxide, CoO; Copper (II) oxide, CuO; Iron (II) oxide, FeO; Lead (II) oxide, PbO; Magnesium (II) oxide, MgO; Mercury (II) oxide, HgO; Nickel (II) oxide, NiO; Palladium (II) oxide, PdO; Silver (II) oxide. AgO; Strontium oxide, SrO; Tin oxide, SnO; Titanium (II) oxide, TiO; Vanadium (II)oxide, VO: Zinc oxide, ZnO.

### +3 oxidation state

Aluminium oxide, Al₂O₃; Antimony trioxide, Sb₂O₃; Arsenic trioxide, As₂O₃; Bismuth trioxide, Bi₂O₃; Boron oxide, B₂O₃; Chromium (III) oxide. Cr₂O₃; Erbium (III) oxide, Er₂O₃; Gadolinium (III) oxide, Gd203; Gallium (III) oxide, Ga₂O₃; Holmium (III) oxide, Ho₂O₃; Indium (III) oxide, In₂O₃; Iron (III) oxide, Fe₂O₃; Lanthanum (III) oxide, La₂O₃; Lutetium (III) oxide, Lu₂O₃; Nickel (III) oxide, Ni₂O₃; Rhodium (III) oxide, Rh₂O₃; Samarium (III) oxide, Sm₂O₃; Scandium (III) oxide, SC₂O₃; Terbium (III) oxide, Tb₂O₃; Thallium (III) oxide, Tl₂O₃; Thulium (III) oxide, Tm₂O₃; Titanium (III) oxide, Ti₂O₃; Tungsten (III) oxide, W₂O_{3;} Vanadium (III) oxide, V₂O₃; Ytterbium (III) oxide, Yb₂O₃; Yttrium (III) oxide, Y₂O₃.

### +4 oxidation state

Cerium (IV) oxide, CeO₂; Chromium (IV) oxide, CrO₂; Germanium dioxide, GeO₂; Hafnium (IV) oxide, HfO₂; Lead (IV) oxide, PbO₂; Manganese (IV) oxide, MnO₂; Plutonium (IV) oxide, PuO₂; Ruthenium (IV) oxide, RuO₂; Silicon (IV) oxide, SiO₂; Thorium dioxide, ThO₂; Tin dioxide, SnO₂; Titanium dioxide, TiO₂, Tungsten (IV) oxide, WO₂; Uranium dioxide, UO₂; Vanadium (IV) oxide, VO₂; Zirconium dioxide, ZrO₂.

### +5 oxidation state

Antimony pentoxide, Sb₂O₅; Arsenic pentoxide, As₂O₅; Niobium Pentoxide, Nb₂O₅; Tantalum pentoxide, Ta₂O₅; Vanadium (V) oxide, V₂O₅.

### +6 oxidation state

Chromium trioxide, CrO₃; Molybdenum (VI) oxide, MoO₃; Rhenium trioxide, ReO₃; Tellurium trioxide, TeO₃; Tungsten trioxide, WO₃; Uranium trioxide, UO₃.

### +7 oxidation state

Manganese (VII) oxide, Mn₂O₇; Rhenium (VII) oxide, Re₂O₇.

### Mixed oxides

Indium tin oxide and indium zinc oxide.

### Nanoparticle shape

The shape of the nanoparticle is not restricted to a sphere and can take any desirable shape, for example, a rod, sphere, disk, tetrapod or star. The control of the shape of the nanoparticle can be achieved in the reaction particle growth process by the addition of a compound that will preferentially bind to a specific lattice plane of the growing particle and subsequently inhibit or slow particle growth in a specific direction. Example of compounds that can be added but is not restricted to include: phosphonic acids (*n*-tetradecylphosphonic acid, hexylphoshonic acid, 1-decanesulfonic acid, 12-hydroxydodecanoic acid, *n*-octadecylphosphonic acid).

### Feedstocks

These molecular feedstocks can be in the form of a single-source precursor whereby all elements required within the as to be growth nanoparticle are present within a single compound precursor or a combination of precursors each containing one or more element/ion required within the as to be grown nanoparticles. These feedstocks may be added at the beginning of the reaction or periodically throughout the reaction of particle growth. This feedstock can be in the form of liquids, solutions, solids, slurries or gases.

The precursors used for the semiconductor material(s) that may form the nanoparticle core and/or any outer shell layers or subsequent shell layers may be provided from separate sources or from a single source.

### M Ion Source

For a compound semiconductor nanoparticle material having the formula (ME)ₙLₘ (where M = first element, E = second element, L = ligand e.g. coordinating organic layer/capping agent, and n and m represent the appropriate stoichiometric amounts of components E and L), a source (i.e. precursor) for element M is added to the reaction and may be any M-containing spices that has the ability to provide the growing particles with a source of M ions. The precursor may comprise, but is not restricted to, an organometallic compound, an inorganic salt, a coordination compound or the element.

With respect to element M, examples for II-VI, III-V, III-VI and IV-V semiconductor materials include but are not restricted to:
Organometallic compounds such as but not restricted to a MR₂ where M = Mg R = alky or aryl group (Mg^{t}Bu₂); MR₂ where M = Zn, Cd, Te; R = alky or aryl group (Me₂Zn, Et₂Zn Me₂Cd, Et₂Cd); MR₃ Where M = Ga, In, Al, B; R = alky or aryl group [AlR₃, GaR₃, InR₃ (R=Me, Et, ^{l}Pr)].

Coordination compounds such as a carbonate but not restricted to a MCO₃ M = Ca, Sr, Ba, [magnesium carbonate hydroxide (MgCO₃)₄ Mg(OH)₂]; M(CO₃)₂ M = Zn, Cd.: MCO₃ M = Pb: acetate: M(CH₃CO₂)₂ M = Mg, Ca, Sr, Ba; Zn, Cd, Hg; M(CH₃C)₃ M = B, Al, Ga, In: a β-diketonate or derivative thereof, such as acetylacetonate (2,4-pentanedionate) [CH₃COOCH=C(O-)CH₃]₂ M = Mg, Ca, Sr, Ba, Zn, Cd, Hg; [CH₃COOCH=C(O-)CH₃]₂ M = B, Al, Ga, In. Oxalate SrC₂O₄, CaC₂O₄, BaC₂O₄, SnC₂O₄.

Inorganic salts such as but not restricted to an oxide (e.g. SrO, ZnO, CdO, In₂O₃, Ga₂O₃, SnO₂, PbO₂) or a nitrate (e.g. Mg(NO₃)₂, Ca(NO₃)₂, Sr(NO₃)₂, Ba(NO₃)₂, Cd(NO₃)₂, Zn(NO₃)₂, Hg(NO₃)₂, Al(NO₃)₃, In(NO₃)₃. Ga(NO₃)₃, Sn(NO₃)₄, Pb(NO₃)₂)

Elemental sources such as but not restricted to Mg, Ca, Sr, Ba, Zn, Cd, Hg, B, Al, Ga, In, Sn, Pb.

### E Ion Source

For a compound semiconductor nanoparticle material having the formula (ME)ₙLₘ (where M = first element, E = second element, L = ligand e.g. coordinating organic layer/capping agent, and n and m represent the appropriate stoichiometric amounts of components E and L), a source (i.e. precursor) for element E is added to the reaction and may be any E-containing spices that has the ability to provide the growing particles with a source of E ions. The precursor may comprise, but is not restricted to, an organometallic compound, an inorganic salt, a coordination compound or the element.

With respect to element E, examples for an II-VI, III-V, III-VI or IV-V semiconductor materials include but are not restricted to:
Organometallic compounds such as but not restricted to a NR₃, PR₃, AsR₃, SbR₃ (R=Me, Et, ^{t}Bu, ⁱBu, Prⁱ, Ph etc.); NHR₂, PHR₂, AsHR₂, SbHR₂ (R=Me, Et, ^{t}Bu, ^{t}Bu, Prⁱ, Ph etc.); NH₂R, PH₂R, AsH₂R, SbH₂R₃ (R=Mₑ, Et, ^{t}Bu, ⁱBu, Prⁱ, Ph etc.); PH₃, AsH₃; M(NMe)₃ M = P, Sb, As; dimethyldrazine (Me₂NNH₂); ethylazide (Et-NNN); hydrazine (H₂NNH₂); Me₃SiN₃.

MR₂ (M = S, Se Te; R=Me, Et, ^{t}Bu, ^{t}Bu, and the like); HMR (M = S, Se Te; R=Me, Et, ^{t}Bu, ⁱBu, ^{l}Pr, Ph, and the like); thiourea S=C(NH₂)₂; Se=C(NH₂)₂.

Sn(CH₄)₄, Sn(C₄H₉), Sn(CH₃)₂(OOCH₃)₂.

Coordination compounds such as but not restricted to a carbonate, MCO₃ M = P, bismuth subcarbonate (BiO)₂CO₃; M(CO₃)₂; acetate M(CH₃CO)₂ M = S, Se, Te: M(CH₃C)₃ M = Sn, Pb: a β-diketonate or derivative thereof, such as acetylaretonate (2,4-pentanedionate) [CH₃COOCH=C(O-)CH₃]₃M M = Bi; [CH₃COOCH=C(O-)CH₃]₂M M = S, Se, Te: [CH₃COOCH=C(O-)CH₃]₂M M = Sn, Pb: thiourea, selenourea (H₂NC(=Se)NH₂

Inorganic salts such as but not restricted to Oxides P₂O₃, As₂O₃, Sb₂O₃, Sb₂O₄, Sb₂O₅, Bi₂O₃, SO₂, SeO₂, TeO₂, Sn₂O, PbO, PbO₂; Nitrates Bi(NO₃)₃, Sn(NO₃)₄, Pb(NO₃)₂

Elemental sources such as but not restricted to: Sn, Ge, N, P, As, Sb, Bi, S, Se, Te, Sn, Pb.

### Combined ME Ion Sources - ME Single Source Precursors

For a compound semiconductor nanoparticle comprising elements M and E, a source for elements M and E can be in the from of a single-source precursor, whereby the precursor to be used contains both M and E within a single molecule.

This precursor can be an organometallic compound, an inorganic salt or a coordination compound, (MₐE_{b})L_{c} where M and E are the elements required within the nanoparticles, L is the capping ligand, and a, b and c are numbers representing the appropriate stroichiometry of M, E and L.

Examples for a II-VI semiconductor where M = II and E = VI element can be but are not restricted to bis(dialkyldithio-carbamato)M,(II) complexes or related Se and Te compounds of the formula M(S₂CNR₂)₂ M = Zn, Cd, Hg; S = S, Se, O, Te and R = alkyl or ary groups; CdS Cd[SSiMe₃]₂. Cd(SCNHNH₂)₂Cl₂, Cd(SOCR)₂·py; CdSe [Cd(SePh)₂]₂.

For III-V semiconductors the precursors can be but are not restricted to:
for GaN [(Me)₂GaN(H)^{t}Bu]₂ [H₂GaNH₂]₃;
for GaP: [Ph₂GaP(SiMe₃)₃Ga(Ph)₂Cl][Et₂GaP(SiMe₃)₂]₂, [Et₂GaPEt₂]₃, [Bu₂GaPH₂]₃ [Me₂GaP(ⁱPr)₂]₃ [^{t}BuGaPAr']₂. [^{t}Bu₂GaP(H)C₅H₉]₂:
forGaAs: Ga(As^{t}Bu₂)₃ [Et₂GaAs(SiMe₃)₂]_{2,} [^{t}Bu₂GaAs(SiMe₃)₂]₂;
for GaSb: [Et₂GaSb(SiMe₃)₂]₂:
for InP: [(Me₃SiCH₂)₂InP(SiMe₃)₂]₂ [R₂InP(SiMe₃)₂]₂, [Me₂InP^{t}Bu₂]₂;
for InSb: [Me₂InSb^{t}Bu₂]₃ [Et₂InSb(SiMe₃)₂]₃, [Me₂InNEt₂]₂, [Et₂AlAs^{t}Bu₂]₂;
for AlSb: [^{t}Bu₂AlSb(SiMe₃)₂]_{2:}
for GaAs: [ⁿBu₂GaAs^{t}Bu₂]₂ [Me₂Ga₂As^{t}Bu₂]₂ [Et₂GaAs^{t}Bu₂]₂.

For II-V semiconductors the precursors can be but are not restricted to:
for Cd₃P₂ [MeCdP^{t}Bu₂]₃ Cd[P(SiPh₃)₂]₂; Zn₃P₂ Zn[P(SiPh₃)₂]₂.

For IV-VI semiconductors the precursors can be but are not restricted to:
for PbS lead (II) dithiocarbamates;
for PbSe Lead (II)selenocarbamates.

### Metal-oxide outer layer

For the growth of the metal oxide core and/or shell layer(s) according to the first two aspects of the present invention a source for the metal element is added to the reaction and may comprise any metal-containing species that has the ability to provide the growing particles with a source of the appropriate metal ions. The precursor can also be the source of the oxygen atoms if they are present within the precursor or the oxygen source can be from a separate oxygen-containing precursor including oxygen. The precursor can comprise but is not restricted to an organometallic compound, an inorganic salt, a coordination compound or the element itself.

The metal oxide precursor may be but is not restricted to the following:

### Oxides of group 1 (IA)

Lithium (Li), Sodium (Na), Potassium (K)

### Oxides of group 2 (IIA)

Beryllium (Be), Magnesium (Mg), Calcium (Ca), Strontium (Sr) Barium (Ba)

### Oxides of the transition elements, groups 3-12 (IIIB, IVB, VB, VIB, VIIB, VIIIB, IB, IIB)

Scandium (Sc), Yttrium (Y), Titanium (Ti), Zirconium (Zr), Hafnium (Hf), Vanadium (V), Niobium (Nb), Tantalum (Ta), Chromium (Cr), Molybdenum (Mo), Tungsten (W), Manganese (Mn), Rhenium (Re), Iron (Fe), Ruthenium (Ru), Osmium (Os), Cobalt (Co), Rhodium (Rh), Iridium, Nickel (Ni), Palladium (Pd), Platinum (Pt), Copper (Cu), Silver (Ag), Gold (Au), Zinc (Zn), Cadmium (Cd) and Mercury (Hg).

### Oxides of the lanthanides

Lanthanum (La), Cerium (Ce), Praseodymium (Pr), Neodymium (Nd), Samarium (Sm), Europium (Eu), Gadolinium (Gd), Terbium (Tb), Dysprosium (Dy), Holmium (Ho), Erbium (Er), Thulium ™, Ytterbium (Yb), Lutetium (Lu).

### Oxides of group 13(IIIA) - for use in the third and fourth aspects of the present invention.

Boron (B), Aluminium (Al), Gallium (Ga), Indium (In), Thallium (TI)

### Oxides of group 14 (IVA)

Silicon (Si), Germanium (Ge), Tin (Sn), Lead (Pb)

### Oxides of group 15 (VA)

Arsenic (As), Antimony (Sb), Bismuth (Bi)

In a preferred method for providing a shell layer of metal oxide, a molecular complex containing both the metal ions and oxide ions to be incorporated into the metal oxide layer may be used. The complex may be added to the nanoparticle cores (e.g. InP) in a single portion or a plurality (e.g. 2, 3, 4 or 5) of portions sufficient to provide the required amount of metal ions and oxide ions.

It may be advantageous to heat a solution containing the nanoparticle cores prior to addition of the molecular complex. Suitable temperatures may be in the range around 150 °C to around 300 °C, more preferably around 180 °C to around 270 °C, still more preferably around 200 °C to around 250 °C and most preferably around 220 °C to around 230 °C.

Following addition of the molecular complex (when a single portion is used) or addition of the final portion of the molecular complex (when two or more portions are used) it may be desirable to cool the nanoparticle solution to a lower temperature, for example, around 160 °C to around 200 °C, more preferably around 180 °C, depending in part upon the temperature of the nanoparticle solution prior to and during addition of the molecular complex.

Following cooling, the nanoparticle solution may then be maintained at the cooler temperature over a period of time to allow the nanoparticles to anneal. Preferred annealing periods are in the range around 1 hour to around 72 hours, more preferably around 12 hours to around 48 hours, and most preferably around 20 to 30 hours.

Following annealing, it may be appropriate to further cool the nanoparticle solution to a lower temperature (e.g. around 30 °C to around 100 °C, more preferably around 50 °C to around 80 °C, more preferably around 70°C) to restrict further nanoparticle growth and facilitate isolation of the final metal oxide coated nanoparticles.

A further preferred method for providing a shell layer of metal oxide involves decomposition of a metal carboxylate in the presence of a long chain (e.g. C₁₆-C₂₀) alcohol to yield the metal oxide, which may be deposited on the nanoparticle core, and an ester as the bi-product. In this method, the metal carboxylate is preferably added to a solution containing the nanoparticle cores, which then heated to a first elevated temperature before addition of a solution containing a predetermined amount of the long chain alcohol. The mixture is then preferably maintained at the first temperature for a predetermined period of time. The temperature of the mixture may then be further increased to a second temperature and maintained at that increased temperature for a further period of time before cooling to around room temperature at which point the metal oxide coated nanoparticles can be isolated.

The first elevated temperature is preferably in the range around 150 °C to around 250 °C, more preferably around 160 °C to around 220 °C, and most preferably around 180 °C. Subject to the proviso that the second temperature is higher than the first temperature, the second temperature is preferably in the range around 180 °C to around 300 °C, more preferably around 200 °C to around 250 °C, and most preferably around 230 °C.

The alcoholic solution is preferably added slowly to the carboxylate solution, for example, the alcoholic solution may be added over a period of at least 2 to 3 minutes, if not longer, such as 5 to 10 minutes or even longer.

The temperature of the reaction mixture may be maintained at the first temperature for at least around 5 to 10 minutes and more preferably longer, such as at least around 20 to 30 minutes or even longer. After raising the temperature of the reaction mixture to the second temperature it is preferred that the mixture is maintained at this increased temperature for at least around 1 to 2 minutes and more preferably longer, for example at least around 4 to 5 minutes or still longer.

The present invention is illustrated with reference to the following non-limiting Examples in which:
**Figure 1** is a schematic representation of a prior art iron oxide core nanoparticle linked to a plurality of CdS nanoparticles
**Figure 2** is a schematic representation of a nanoparticle coated with octylamine capping agent;
**Figure 3** is a schematic representation of, a) a particle consisting of a semiconductor core only, b) a particle consisting of a semiconductor core and metal-oxide shell in accordance with a preferred embodiment of the first aspect of the present invention, and c) a particle consisting of a semiconductor core a buffer layer of a different semiconductor material and an outer metal-oxide shell in accordance with a further preferred embodiment of the first aspect of the present invention;
**Figure 4** is a schematic representation of a semiconductor/metal oxide (InP/Fe₂O₃) core/shell nanoparticle which is not in accordance with the present invention but which shares many features with core/shell nanoparticles which are, and which is prepared as described below in Example 3, which is provided for reference;
**Figure 5** shows photoluminescence spectra of InP and InP/In₂O₃ nanoparticles which are not in accordance with the present invention and which can be produced according to Example 4, which is provided for reference;
**Figure 6** shows photoluminescence spectra of CdSe/γ-Fe₂O₃ nanoparticles with increasing Fe₂O₃ shell thickness which are not in accordance with the present invention and which can be prepared as described below in Example 5, which is provided for reference;
**Figure 7** shows x-ray diffraction patterns of the CdSe/γ-Fe₂O₃ core/shell nanoparticles prepared according to Example 5 (top line) which are not in accordance with the present invention and CdSe nanoparticles (bottom line) which are also not in accordance with the present invention;
**Figure 8** is a transmission electron microscopy image of CdSe nanoparticles which are not in accordance with the present invention but which is included for reference; and

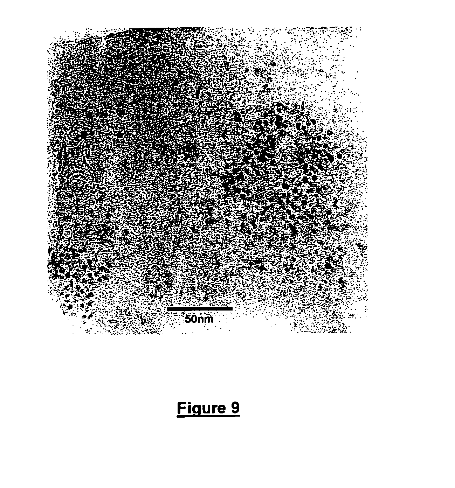

**Figure 9** is a transmission electron microscopy image of CdSe/γ-Fe₂O₃ core/shell nanoparticles prepared according to Example 5 which are not in accordance with the present invention but which is included for reference.

### EXAMPLES

All syntheses and manipulations were carried out under a dry oxygen-free argon or nitrogen atmosphere using standard Schlenk or glove box techniques unless other wise stated. All solvents were distilled from appropriate drying agents prior to use (Na/K-benzophenone for THF, Et₂O, toluene, hexanes and pentane).

UV-vis absorption spectra were measured on a HeAlosβ Thermospectronic. Photoluminescence (PL) spectra were measured with a Fluorolog-3 (FL3-22) photospectrometer and using Ocean Optics instruments. Powder X-Ray diffraction (PXRD) measurements were preformed on a Bruker AXS D8 diffractometer using monochromated Cu-Kₐ radiation.

### EXAMPLE 1

### Preparation of InP/ZnO Core/Shell Nanoparticles (red)

InP core particles were made as follows: 200ml di-n-butylsebacate ester and 10g myristic acid at 60°C were placed in a round bottomed three neck flask and purged with N₂ this was followed by the addition of 0.94g of the ZnS cluster [HNEt₃]₄[Zn₁₀S₄(SPh)₁₆]. The reaction was then heated to 100°C for 30mins followed by the addition of 12ml of 0.25M [In₂(Ac)₃(MA)₃], dissolved in di-n-butylsebacate ester, over a period of 15mins using an electronic syringe pump at a rate of 48ml/hr, this was followed by the addition of 12ml 0.25M (TMS)₃P at the same addition rate.

Once additions were complete the temperature of the reaction was increased to 180°C. To grow the particles up to the required size and thus the required emission in the red, further addition of solutions of [In₂(Ac)₃(MA)₃] and (TMS)₃P were made as followed:- 16ml [In₂(Ac)₃(MA)₃] followed by 16ml (TMS)₃P were added followed by a temperature increase to 200°C then further additions of 10ml of [In₂(Ac)₃(MA)₃], the temperature was then left at 200°C for 1hr and then lowered to 160°C and the reaction allowed to anneal for 3 days. Then the particles were isolated using acetonitrile, centrifuged and collected. The InP quantum dots had an emission peak at 550nm.

The formation of a ZnO shell is based on the decomposition product of a suitable metal carboxylic acid with a long chain alcohol yielding an ester as the bi-product. InP core dots 165.8mg prepared as described above were dissolved in 10ml of di-n-butylsebacate ester. This was then added to a 3 neck round bottom flask containing zinc acetate and myristic acid and the flask was then degassed and purged with N₂ several times. In a separate flask a solution of 1-octadecanol (2.575g, 9.522mmol) and ester 5ml of di-n-butylsebacate ester was made up at 80°C.

The reaction solution containing the dots were then heated to 180°C at which temperature the alcohol solution was slowly added over a period of 5-10 minutes. The temperature of the reaction was then maintained for 30 minutes followed increasing the temperature to 230°C and maintained at this temperature for 5 minutes before cooling to room temperature.

The sample was isolated by the addition of excess acetonitrile, centrifuging the resulting wet solid pellet was further washed with acetonitrile and centrifuging for a second time. The resulting pellet was dissolved with chloroform and filtered to remove any remaining insoluble material.

### EXAMPLE 2

### Preparation of InP/ZnS/ZnO Core/Shell/shell Nanoparticles

InP core particles were made as follows: 200ml di-n-butylsebacate ester and 10g myristic acid at 60°C were placed in a round bottomed three neck flask and purged with N₂ this was followed by the addition of 0.94g of the ZnS cluster [HNEt₃]₄[Zn₁₀S₄(SPh)₁₆]. The reaction was then heated to 100°C for 30mins followed by the addition of 12ml of 0.25M [In₂(Ac)₃(MA)₃], dissolved in di-n-butylsebacate ester, over a period of 15mins using an electronic syringe pump at a rate of 48ml/hr, this was followed by the addition of 12ml 0.25M (TMS)₃P at the same addition rate.

Once additions were complete the temperature of the reaction was increased to 180°C. To grow the particles up to the required size and thus the required emission in the red, further addition of solutions of [In₂(AC)₃(MA)₃] and (TMS)₃P were made as followed:- 16ml [In₂(Ac)₃(MA)₃] followed by 16ml (TMS)₃P were added followed by a temperature increase to 200°C then further additions of 10ml of [In₂(Ac)₃(MA)₃], the temperature was then left at 200°C for 1hr and then lowered to 160°C and the reaction allowed to anneal for 3 days. Then the particles were isolated using acetonitrile, centrifuged and collected. The InP quantum dots had an emission peak at 550nm.

Two methods using different S sources (Method 1. (TMS)₂S; Method 2. octanethiol) were employed to form a buffer layer of ZnS on the InP core nanoparticles prior to addition of the ZnO outer shell.

### Method 1

3.13g (13.7mmol) of myristic acid and 6.75ml of di-n-butyl sebacate ester were degassed. 300mg of the HF etched InP dots and 1.68g (9.15mmol) of anhydrous zinc acetate was added at room temperature. The solution was slowly heated to 180°C. 9.2ml (2.3mmol) of 0.25M (TMS)₂S was added dropwise and after completion the mixture was stirred for 30 minutes.

### Method 2

3.13g of myristic acid and 6.75ml of di-n-butyl sebacate ester were degassed. 300mg of the HF etched InP dots and 1.68g anhydrous zinc acetate was added at room temperature. The solution was slowly heated to 120°C. 0.4ml (2.3mmol) octanethiol was added in one portion and the temperature increased to 180°C where it was kept for 30 minutes.

The formation of a ZnO shell is based on the decomposition product of a suitable metal carboxylic acid with a long chain alcohol yielding an ester as the bi-product. InP core dots 165.8mg prepared as described above were dissolved in 10ml of di-n-butylsebacate ester. This was then added to a 3 neck round bottom flask containing zinc acetate and myristic acid and the flask was then degassed and purged with N₂ several times. In a separate flask a solution of 1-octadecanol (2.575g, 9.522mmol) and ester 5ml of di-n-butylsebacate ester was made up at 80°C.

The reaction solution containing the dots were then heated to 180°C at which temperature the alcohol solution was slowly added over a period of 5-10 minutes. The temperature of the reaction was then maintained for 30 minutes followed increasing the temperature to 230°C and maintained at this temperature for 5 minutes before cooling to room temperature.

The sample was isolated by the addition of excess acetonitrile, centrifuging the resulting wet solid pellet was further washed with acetonitrile and centrifuging for a second time. The resulting pellet was dissolved with chloroform and filtered to remove any remaining insoluble material.

### REFERENCE EXAMPLE 3

### Preparation and Properties of InP/Fe₂O₃ Core/Shell Nanoparticles (Included for Preference)

InP core particles were made as follows: 200ml di-n-butylsebacate ester and 10g myristic acid at 60°C were placed in a round bottomed three neck flask and purged with N₂ this was followed by the addition of 0.94g of the ZnS cluster [HNEt₃]₄[Zn₁₀S₄(SPh)₁₆]. The reaction was then heated to 100°C for 30mins followed by the addition of 12ml of 0.25M solution of [In₂(Ac)₃(MA)₃] dissolved in di-n-butylsebacate ester over a period of 15mins using an electronic syringe pump at a rate of 48ml/hr, this was followed by the addition of 12ml of a 0.25M solution of (TMS)₃P dissolved in di-n-butylsebacate ester at the same addition rate.

Once additions were complete the temperature of the reaction was increased to 180°C. To grow the particles up to the required size and thus the required emission in the red, further addition of [In₂(Ac)₃(MA)₃] and (TMB)₃P were made as follows: 16ml [In₂(Ac)₃(MA)₃] followed by 16ml (TMS)₃P were added followed by a temperature increase to 200°C then further additions of 10ml of [In₂(Ac)₃(MA)₃], the temperature was then left at 200°C for 1 hr and then lowered to 160°C and the reaction allowed to anneal for 3 days. The particles were isolated using acetonitrile, centrifuged and collected. The InP quantum dots had an emission at 550nm.

The InP nanoparticles were precipitated with methanol and isolated as a pellet by centrifugation. The supernate was discarded and 1.0 g of the InP pellet were placed in a 125 mL round bottom flask containing 50 g hexadecylamine that had previously been dried and degassed under vacuum at 120 °C.

The solution temperature was raised to 230°C and 3.30 mL of a 0.0286 M ferric cupferron solution in octylamine was added dropwise over a 10 minute period. The solution was left stirring for an additional 20 minutes before an aliquot was taken and a second 3.30 mL portion of ferric cupferron solution was added dropwise over a 10 minute period. The solution was stirred for 20 min and an aliquot was taken. A third and final 3.30 mL portion of ferric cupferron solution was added dropwise over a 10 minute period.

After the final addition, the reaction was stirred for an additional 20 min, cooled to 180°C and left stirring at 180 °C for 24 hr before cooling to 70°C. Methanol was added to precipitate the particles. The precipitate was isolated as a pellet by centrifugation and the supemate was discarded.

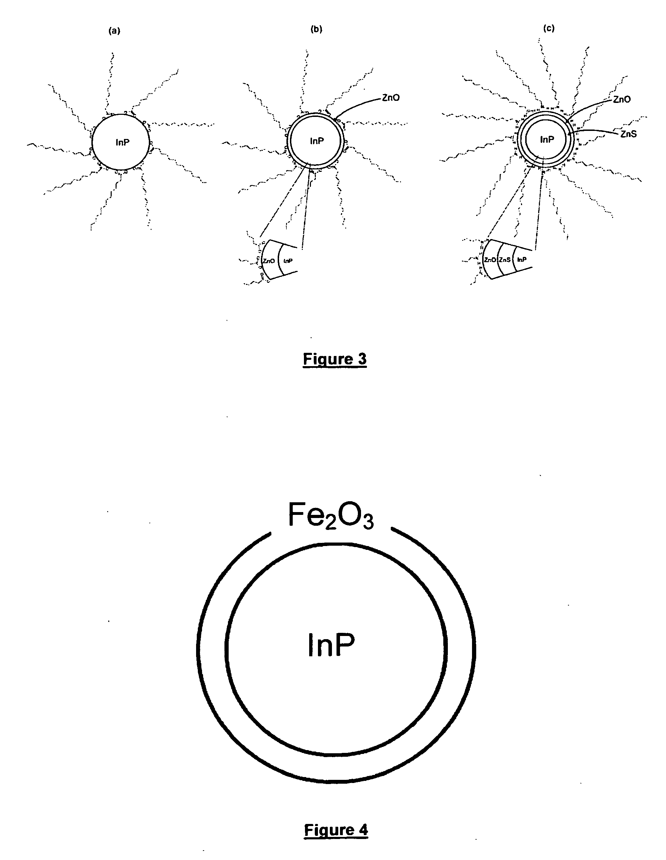

The PL emission intensity for that of the core/shell particles was about 200 times more intense than that of the core particles prior to the addition of the Fe₂O₃ layer. A schematic representation of InP/Fe₂O₃ core/shell nanoparticles is shown in Figure 3.

### EXAMPLE 4

Red-emitting InP nanoparticle cores were produced as described in Example 1.

A similar method to that described in Example 1 was then used to deposit a layer of In₂O₃ on the InP cores: 30ml of the InP reaction solution was removed and then heated under Ar to 180°C. Slowly 3ml of octanol was added and then left for 30 minutes before cooling to room temperature. While the applicants do not wish to be bound by any particular theory, it is believed that excess In(MA)₃ in the InP core reaction solution reacted with the octanol to deposit an In₂O₃ shell on the InP cores.

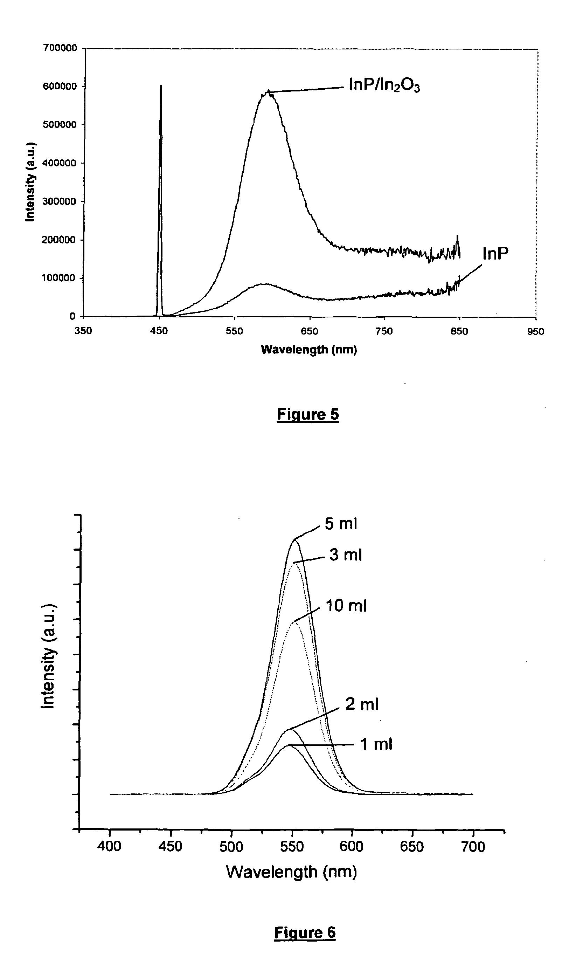

It was observed that the quantum yield of the In₂O₃ core/shell nanoparticles was 6 times greater than the quantum yield of the unshelled InP cores (see Figure 5).

It is postulated that a shell of In₂O₃ may act as a buffer layer between InP cores and outer layers of ZnS and ZnO in nanoparticles produced according to Example 2 above. On the basis of the improvement in quantum yield observed when InP cores were coated with In₂O₃, the addition of a further buffer layer of In₂O₃ (in addition to a buffer layer of ZnS) may improve both the final quantum yield and/or stability of the InP/In₂O₃/ZnS/ZnO nanoparticle material as compared to the InP/ZnS/ZnO produced in Example 2.

### REFERENCE EXAMPLE 5

### Synthesis of CdSe/Fe₂O₃ (with green emission) (included for Reference)

In a typical synthesis 100 g HDA (hexadecylamine) was degassed at 120°C for an hour. The flask was then purged with nitrogen and 1.25g of [Et₃NH]₄[Cd₁₀Se₄(SPh)₁₆] was added in one portion as a solid at 100°C. The solution was slowly heated to 260°C and kept at this temperature for about 1 hour. The solution was cooled to 150°C and a further 0.26g [Et₃NH]₄[Cd₁₀Se₄(SPh)₁₆] was added. The solution was reheated to 260°C for a further hour or until the maximum emission peak reached 550nm. The CdSe nanoparticles were collected by cooling the reaction solution, precipitating with excess methanol centrifuging and drying with a nitrogen flow.

A dilute solution of FeCup₃ in octylamine was made, 30ml octylamine, 0.248g FeCup₃ was dissolved to give a 0.018M solution. In a separate flask, 75g HDA was degassed at 120°C, then cooled to 100°C and 0.3g of the 550 nm CdSe particles added. The temperature of the reaction was raised to 230°C and the FaCup₃/octylamine solution was added dropwise in 5 separate portions of 1ml, 1ml, 1ml, 2ml and 5ml making in total 10ml of added solution. The reaction was left to stir for 5 minutes in-between each portion.

After the complete addition of FeCup₃ reaction was cooled to 180°C and left to anneal for up to 3 hours, then cooled to room temperature and isolated by precipitating with methanol, then centrifuging and dried with a nitrogen flow.

Elemental analysis gave C= 24.42, H= 3.93, N=1.32, Cd= 42.46, Fe= 2.81.

### REFERENCE EXAMPLE 6

### Preparation of CdSe/Fe₂O₃ Core/Shell Nanoparticles (with red emission) (Included for Reference)

A 25 g portion of hexadecylamine (HDA) was placed in a three-neck round bottomed flask and dried and degassed by heating to 120 °C under a dynamic vacuum for > 1 hour. The solution was cooled to 60 °C, the reaction flask was filled with nitrogen and the following reagents were loaded into the flask using standard airless techniques: 0.10 g [HNEt₃]₄[Cd₁₀Se₄(SPh)₁₆], 2 mL of a premixed precursor solution (a solution of 0.26M Me₂Cd and 0.25 M elemental selenium dissolved in trioclylphosphine). The temperature was increased to 120 °C and allowed to stir for 2 hours. At this point a programmed temperature ramp from 120 °C to 200 °C at a rate of ~0.2°C/min was initiated. Simultaneously, an additional 4 mL of the premixed precursor solution was added dropwise at a rate of -0.05 mL/min.

Particle growth was stopped when the PL emission maximum had reached the required emission (λₘₐₓ = 585 nm) by cooling to 60°C followed by the addition of an excess of dry methanol to precipitate the particles from solution. The precipitate was isolated by centrifugation, the pellet was retained and the supemate was discarded.

A 125 mg portion of the CdSe pellet was placed in a 126 mL round bottom flask containing 25 g octadecylamine that had previously been dried and degassed under vacuum at 120 °C. The solution temperature was raised to 220 °C and 2.5 mL of a 0.0286 M ferric cupferron solution in octylamine was added dropwise over a 10 minute period. The solution was left stirring for an additional 20 minutes before a second 2.5 mL portion of ferric cupferron solution was added dropwise over a 10 minute period. The solution was stirred for 20 min. A third and final 2.5 mL portion of ferric cupferron solution was added dropwise over a 10 minute period.

After the final addition, the reaction was stirred for an additional 20 minutes, and the reaction was cooled to 180 °C. The solution was left stirring at 180 °C for 4 hr before cooling to 70 °C and 15 mL of the reaction mixture was removed and placed in a centrifuge tube. A 45 mL portion of methanol was added to precipitate the particles. The precipitate was isolated as a pellet by centrifugation and the supemate was discarded. Portions of the pellet were redispersed in toluene.

The formation of the FeCup₃ layer produces a slight red shift both in PL maximum and first absorption peak (see Figure 4) of ~3.5nm, which is considerably less than the shift when either CdS or ZnS is grown epitaxially onto the particle.

Figure 5 shows that the XRD pattern of CdSe/ y-Fe₂O₃ nanocrystals had a very similar shape to that of pure CdSe cores, however a sharpening of the three major peaks for the CdSe/γ-Fe₂O₃ can be seen. No noticeable peaks attributable to bulk γ-Fe₂O₃ are evident in the diffraction pattern.

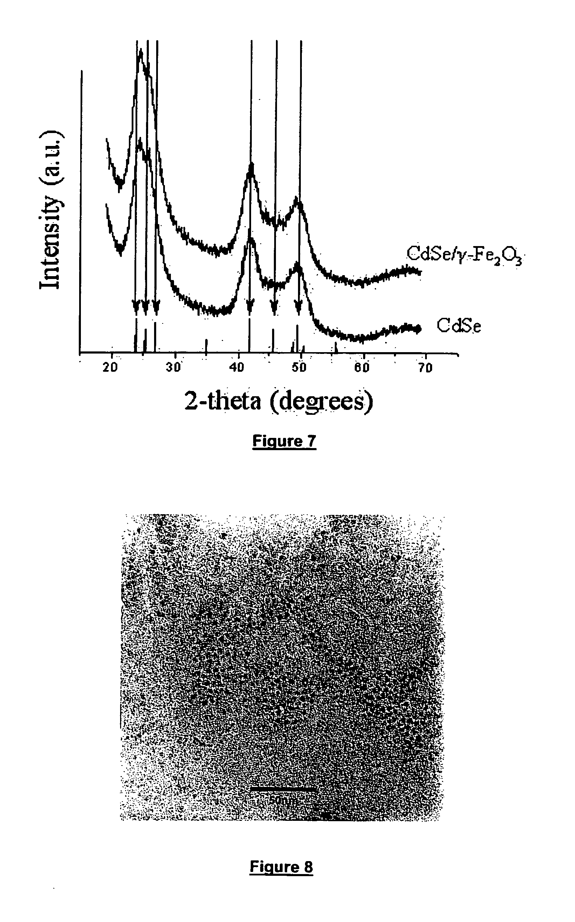

Figure 6 shows a TEM image of CdSe nanoparticles with average diameters of 3.7 nm. Figure 7 shows that the particle size increased to 4.2 nm when shelled with Fe₂O₃. There appeared to be a slight aggregation of the nanoparticles after shelling with Fe₂O₃, however the particles still easily dissolve in organic solvents.

### REFERENCE EXAMPLE 7

### Preparation of ZnSe/Fe₂O₃ Core/Shell Nanoparticles (included for Reference)

A 125 mL round bottom flask was loaded with 25 g octadecylamine and a spin-bar, the flask was attached to a schlenk line and evacuated. The solvent was dried and degassed under vacuum for 1 hr at 120 °C. The flask was filled with nitrogen and the temperature increased from 120 °C to 340 °C over a 2 hr period. At this point, 4 mL of a premixed precursor solution (0.25 M diethyl zinc and 0.25 M elemental selenium dissolved in TOP) was injected into the flask. The reaction temperature plunged to 300 °C immediately following the precursor solution injection and was maintained at 300 °C.

An additional 16 mL portion of premixed precursor solution was added dropwise over a 4 hour period. The temperature was lowered to 250 °C and the solution was left stirring overnight. The ZnSe nanoparticles were precipitated with hot (70 °C) n-butanol and isolated as a pellet by centrifugation.

The supemate was discarded and 125 mg of the ZnSe pellet was placed in a 125 mL round bottom flask containing 25 g octadecylamine that had previously been dried and degassed under vacuum at 120 °C. The solution temperature was raised to 220 °C and 2.5 mL of a 0.0286 M ferric cupferron solution in octylamine was added dropwise over a 10 minute period. The solution was left stirring for an additional 20 minutes before an aliquot was taken and a second 2.5 mL portion of ferric cupferron solution was added dropwise over a 10 minute period. The solution was stirred for 20 minutes a third and final 2.5 mL portion of ferric cupferron solution was added dropwise over a 10 minute period.

After the final addition, the reaction was stirred for an additional 20 minutes and the reaction was allowed to cool to 180 °C. The solution was left stirring at 180 °C for 4 hr before cooling to 70 °C. A 15 mL portion of the reaction mixture was removed and placed in a centrifuge tube. A 45 mL portion of methanol was added to precipitate the particles. The precipitate was isolated as a pellet by centrifugation and the supernate was discarded. Portions of the pellet were redispersed in toluene.

### REFERENCE EXAMPLE 8

### Preparation and Properties of CdTe/Fe₂O₃ Core/Shell Nanoparticles (Included for Reference)

A 125 mL round bottom flask was loaded with 25 g hexadecylamine and a spin-bar. The flask was attached to a schlenk line and evacuated. The solvent was dried and degassed under vacuum for 1 hr at 120 °C. The flask was filled with nitrogen and the temperature increased from 120 °C to 260 °C over a 2 hr period. At this point, 4 mL of a premixed precursor solution (0.25 M dimethyl cadmium and 0.25 M elemental tellurium dissolved in TOP) was added. The reaction temperature plunged to 240 °C immediately following the precursor solution injection and was maintained at 240 °C for 5 minutes. The temperature was lowered to 50 °C by removing the flask from the mantle and exposing it to a stream of cool air. The CdTe nanoparticles were precipitated with methanol and isolated as a pellet by centrifugation.

The supernate was discarded and 125 mg of the CdTe pellet were placed in a 125 mL round bottom flask containing 25 g hexadecylamine that had previously been dried and degassed under vacuum at 120 °C. The solution temperature was raised to 220 °C and 2.5 mL of a 0.0286 M ferric cupferron solution in octylamine was added dropwise over a 10 minute period. The solution was left stirring for an additional 20 minutes a second 2.5 mL portion of ferric cupferron solution was added dropwise over a 10 minute period. The solution was stirred for 20 minutes and then a third and final 2.5 mL portion of ferric cupferron solution was added dropwise over a 10 minute period.

After the final addition, the reaction was stirred for an additional 20 minutes, and the reaction was cooled to 180 °C. The solution was left stirring at 180 °C for 4 hr before cooling to 70 °C. A 15 mL portion of the reaction mixture was removed and placed in a centrifuge tube. A 45 mL portion of methanol was added to precipitate the particles. The precipitate was isolated as a pellet by centrifugation and the supemate was discarded. Portions of the pellet were redispersed in toluene.

### EXAMPLE 9

### Preparation and Properties of InP/In₂O₃/ZnS/ZnO Core/Shell Nanoparticles

### Synthesis of InPAn₂O₃ cores

| **Material** | **Amount** | **Moles** | **MW** | **Grade** |
|---|---|---|---|---|
| Di-n-butyl-sebacate ester | 250ml | 0.0744 | 314.46 | tech |
| (Et₃NH]₄[Zn₁₀S₄(SPh)₁₆] | 9.4g | 0.0032 | 2937.67 | |
| Mystic acid | 25g | 4.469x10⁻³ | 228.37 | 99% |
| Indium myristate (1 M soln in ester) | 40mL | 0.04 | 796.93 | |
| Tris(trimethylsilylphosphine) 1M soin in ester | 26ml | 0.026 | 250.54 | |
| 1-Octanol | 53.8 | 0.3416 | 130.23 | 99% |
| Chloroform | 50ml | | | anhydrous |
| Methanol | 100 mL | | | anhydrous |
| Acetonitrile | 250 mL | | | anhydrous |

The ester was added to a 3-neck round bottomed flask equipped with condenser, thermometer and magnetic stirrer bar then degassed under vacuum at 100 °C for two hours. Temperature decreased to 70 °C and put under nitrogen atmosphere. Cluster was added in one portion and stirred for 30 minutes. Temperature increased to 100 °C then 15ml In(MA)₃ was added dropwise. After complete addition the reaction was stirred for 5 minutes then was followed by the dropwise addition of 15ml (TMS)₃P. Temperature increased to 160°C then 20ml Im(MA)ₛ was added dropwise. After complete addition the reaction was stirred for 5 minutes then was followed by the dropwise addition of 8ml (TMS)₃P. Temperature increased to 190 °C then 5ml In(MA)₃ was added dropwise. After complete addition the reaction was stirred for 5 minutes then was followed by the dropwise addition of 3ml (TMS)₃P. Temperature Increased to 200 °C where it was left to stir for 1 hour. Temperature decreased to 160 °C and the quantum dots left to anneal for 3 days. Temperature Increased to 180 °C then the octanol was added in one portion. The reaction was left to stir for 30 minutes then cooled to room temperature. Anhydrous acetonitrile was added until the particles flocculated then the precipitate was centrifuged. The wet powder was redissolved in minimum volume of chloroform and reprecipitated with methanol. The wet powder was redissolved again in the minimum volume of chloroform then reprecipited with methanol. The dots were dissolved in chloroform then etched using a dilute solution of HF in air over a period of 3 days until maximum luminescence intensity was seen.

### Shelling of InP/In₂O₃ cores with ZnS/ZnO Shell

| **Material** | **Amount** | **Moles** | **MW** | **Grade** |
|---|---|---|---|---|
| InP/In₂O₃ cores in | 5.64 | | | |
| 50ml ester | | | | |
| Di-n-butyl- | 70ml | 0.0744 | 314.46 | Tech |
| sebacate ester | | | | |
| | | | | |
| Undecylenic acid | 18g | 0.0978 | 184.28 | 98% |
| Zinc acetate | 15g | 0.0818 | 183.46 | 99.99% |
| 1-Octanethiol | 9ml | 0.0519 | 146.29 | 98.5% |
| 1-Octanol | 12.8 | 0.0813 | 130.23 | 99% |
| Toluene | 40ml | | | anhydrous |
| Acetonitrile | 180ml | | | anhydrous |
| Ethyl acetate | 100ml | | | anhydrous |

The ester, cores produced as described above and undecylenic acid were added together in a 3-neck round bottomed flask equipped with condenser, thermometer and magnetic stirrer bar then degassed under vacuum for 2 hours at 100°C. The temperature was decreased to 70 °C then the zinc acetate was added in small portions to one neck of the flask under strong nitrogen flow. Temperature increased to 100 °C then the reaction was evacuated under reduced pressure for 20 minutes then purged with nitrogen. Then evacuated/purged a further two times. Temperature increased to 120°C then the octanethiol was added in one portion. Temperature increased to 230°C and held for 90 minutes. Temperature decreased to 180°C then the octanol was added in one portion and held at 180°C for 30 minutes. Solution was then cooled to room temperature. Anhydrous acetonitrile was added until the particles flocculated then the precipitate was filtered through a celite filled sinter funnel. The precipitate was washed first with hot acetonitrile (discarding the washings) then washed with hot ethylacetate (that dissolves the dots). The dots dissolved in the ethylacetate was then reprecipitated by adding acetonitrile. Finally the precipitated dots was dissolved in minimum volume of toluene and stored in an inert atmosphere. InP/In₂O₃/ZnS/ZnO core/shell nanoparticles were produced emitting at 506nm, with a full width at half maximum (FWHM) of 55nm and quantum yield (QY) of 50%.

### REFERENCES

1. Murray, C. B.; Norris, D. J.; Bawendi, M. G. J. Am. Chem. Soc. 1993, 115, 8706.
2. LØver, T.; Bowmaker, G. A.; Seakins, J. M.; Cooney, R. P.; Henderson, W. J. Mater. Chem., 1997, 7(4), 647.
3. Cumberland, S. L.; Hanif, K. M.; Javier, A.; Khitov, K. A.; Strouse, G. F.; Woessner, S. M.; Yun, C. S. Chem. Mater. 2002, 14, 1576.

## Claims

1. A quantum dot nanoparticle comprising a core comprised of a first material and a layer comprised of a second material, wherein the first material is a semiconductor material incorporating ions from group 13 and group 15 of the periodic table and the second material is a metal oxide material incorporating metal ions selected from group 12 of the periodic table.

2. A quantum dot nanoparticle according to claim 1, wherein the group 12 metal is selected from the group consisting of zinc, cadmium and mercury.

3. A quantum dot nanoparticle according to claim 1 or 2, wherein the group 13 ions incorporated in the semiconductor material are selected from the group consisting of boron, aluminium, gallium and indium, and/or the group 15 ions incorporated in the semiconductor material are selected from the group consisting of phosphide, arsenide and nitride.

4. A quantum dot nanoparticles according to any preceding claim, wherein the layer comprised of the second material is deposited on the core comprised of the first material.

5. A quantum dot nanoparticle according to any one of claims 1 to 3, wherein a further layer comprised of a third material is provided between the nanoparticle core comprised of the first material and the layer comprised of the second material, the third material preferably being a semiconductor material incorporating ions selected from at least one of groups 2 to 16 of the periodic table.

6. A method for producing a quantum dot nanoparticle comprising a core comprised of a first material and a layer comprised of a second material, wherein the first material is a semiconductor material incorporating ions from group 13 and group 15 of the periodic table and the second material is a metal oxide material incorporating metal ions selected from group 12 of the periodic table, the method comprising forming said core comprised of said first material and forming the layer comprised of said second material.

7. A method according to claim 6, wherein formation of said core comprises effecting conversion of a nanoparticle core precursor composition to the material of the nanoparticle core.

8. A method according to claim 7, wherein said nanoparticle core precursor composition comprises first and second core precursor species containing the ions to be incorporated into the growing nanoparticle core.

9. A method according to claim 8, wherein said first and second core precursor species are separate entities contained in said core precursor composition, and said conversion is effected in the presence of a molecular cluster compound under conditions permitting seeding and growth of the nanoparticle core, or said first and second core precursor species are combined in a single entity contained in said core precursor composition.

10. A method according to any one of claims 6 to 9, wherein formation of the layer comprised of the second material comprises effecting conversion of a second material precursor composition to said second material.

11. A method according to claim 10, wherein the second material precursor composition comprises the metal ions and the oxide ions to be incorporated into the layer comprised of the second material.

12. A method according to claim 11, wherein the metal ions and the oxide ions are separate entities contained in the second material precursor composition, or the metal ions and the oxide ions are combined in a single entity contained in the second material precursor composition.

13. A method according to any one of claims 10 to 12, wherein the second material precursor composition contains a metal carboxylate compound comprising metal ions to be incorporated into the layer comprised of the metal oxide material and said conversion comprises reacting said metal carboxylate compound with an alcohol compound.

14. A method according to claim 13, wherein the carboxylate moiety of said metal carboxylate compound comprises 2 to 6 carbon atoms, or said metal carboxylate compound is a metal acetate compound.

15. A method according to claim 13 or 14, wherein said alcohol is a C₆-C₂₄ linear or branched alcohol compound.

16. A method according to any one of claims 13 to 15, wherein said reaction of the metal carboxylate compound and the alcohol yields said metal oxide material that is comprised in said nanoparticle layer.

17. A method according to any one of claims 13 to 16, wherein the metal oxide precursor composition comprises oxide ions to be incorporated into the layer comprised of the metal oxide and said oxide ions are derived from a source other than said metal carboxylate compound or said oxide ions are derived from said metal carboxylate compound.

## Patentansprüche

1. Quantenpunkt-Nanopartikel mit einem Kern aus einem ersten Material und einer Schicht aus einem zweiten Material, wobei das erste Material ein Halbleitermaterial ist, das Ionen aus Gruppe 13 und Gruppe 15 des Periodensystems enthält, und das zweite Material ein Metalloxidmaterial ist, das Metallionen enthält, die aus Gruppe 12 des Periodensystems ausgewählt sind.

2. Quantenpunkt-Nanopartikel nach Anspruch 1, wobei das Metall der Gruppe 12 unter Zink, Cadmium und Quecksilber ausgewählt ist.

3. Quantenpunkt-Nanopartikel nach Anspruch 1 oder 2, wobei die in dem Halbleitetmaterial enthaltenen Ionen der Gruppe 13 unter Bor, Aluminium, Gallium und Indium ausgewählt sind und/oder die in dem Halbleitermaterial enthaltenen Ionen der Gruppe 15 unter Phosphid, Arsenid und Nitrid ausgewählt sind.

4. Quantenpunkt-Nanopartikel nach einem der vorstehenden Ansprüche, wobei die Schicht aus dem zweiten Material auf dem Kern aus dem ersten Material abgelagert ist.

5. Quantenpunkt-Nanopartikel nach einem der Ansprüche 1 bis 3, wobei eine weitere Schicht aus einem dritten Material zwischen dem Nanopartikelkern aus dem ersten Material und der Schicht aus dem zweiten Material vorgesehen ist, wobei das dritte Material vorzugsweise ein Halbleitermaterial ist, das Ionen enthält, die aus mindestens einer der Gruppen 2 bis 16 des Periodensystems ausgewählt sind.

6. Verfahren zur Herstellung eines Quantenpunkt-Nanopartikels mit einem Kern aus einem ersten Material und einer Schicht aus einem zweiten Material, wobei das erste Material ein Halbleitermaterial ist, das Ionen aus Gruppe 13 und Gruppe 15 des Periodensystems enthält, und das zweite Material ein Metalloxidmaterial ist, das Metallionen enthält, die aus Gruppe 12 des Periodensystems ausgewählt sind, wobei das Verfahren aufweist: Ausbilden des Kerns aus dem ersten Material und Ausbilden der Schicht aus dem zweiten Material.

7. Verfahren nach Anspruch 6, wobei die Bildung des Kerns die Ausführung der Umwandlung einer Nanopartikelkern-Vorläuferzusammensetzung in das Material des Nanopartikelkerns aufweist.

8. Verfahren nach Anspruch 7, wobei die Nanopartikelkern-Vorläuferzusammensetzung erste und zweite Vorläuferspezies aufweist, welche die Ionen enthalten, die in den wachsenden Nanopartikelkern einzubauen sind.

9. Verfahren nach Anspruch 8, wobei die ersten und zweiten Kernvorläuferspezies getrennte, in der Kernvorläuferzusammensetzung enthaltene Bausteine sind und die Umwandlung in Anwesenheit einer Molekülaggregatverbindung unter Bedingungen ausgeführt wird, die das Einimpfen und Wachstum des Nanopartikelkerns zulassen, oder wobei die ersten und zweiten Kernvorläuferspezies in einem einzigen, in der Kernvorläuferzusammensetzung enthaltenen Baustein vereinigt sind.

10. Verfahren nach einem der Ansprüche 6 bis 9, wobei die Bildung der Schicht aus dem zweiten Material die Ausführung der Umwandlung einer zweiten Materialvorläuferzusammensetzung in das zweite Material aufweist.

11. Verfahren nach Anspruch 10, wobei die zweite Materialvorläuferzusammensetzung die Metallionen und Oxidionen aufweist, die in die Schicht aus dem zweiten Material einzubauen sind.

12. Verfahren nach Anspruch 11, wobei die Metallionen und die Oxidionen getrennte, in der zweiten Materialvorläuferzusammensetzung enthaltene Bausteine sind oder die Metallionen und die Oxidionen in einem einzigen, in der zweiten Materialvorläuferzusammensetzung enthaltenen Baustein vereinigt sind.

13. Verfahren nach einem der Ansprüche 10 bis 12, wobei die zweite Materialvorläuferzusammensetzung eine Metallcarboxylatverbindung enthält, die Metallionen aufweist, die in die Schicht aus dem Metalloxidmaterial einzubauen sind, und wobei die Umwandlung eine Reaktion der Metallcarboxylatverbindung mit einer Alkoholverbindung beinhaltet.

14. Verfahren nach Anspruch 13, wobei die Carboxylat-Komponente der Metallcarboxylatverbindung 2 bis 6 Kohlenstoffatome aufweist oder die Metallcarboxylatverbindung eine Metallacetatverbindung ist.

15. Verfahren nach Anspruch 13 oder 14, wobei der Alkohol eine lineare oder verzweigte C₆-C₂₄-Alkoholverbindung ist.

16. Verfahren nach einem der Ansprüche 13 bis 15, wobei die Reaktion der Metallcarboxylatverbindung und der Alkoholverbindung das in der Nanopartikelschicht enthaltene Metalloxidmaterial liefert.

17. Verfahren nach einem der Ansprüche 13 bis 16, wobei die Metalloxidvorläuferzusammensetzung in die Schicht aus Metalloxid einzubauende Oxidionen aufweist und die Oxidionen aus einer anderen Quelle als der Metallcarboxylatverbindung abgeleitet sind oder die Oxidionen aus der Metallcarboxylatverbindung abgeleitet sind.

## Revendications

1. Nanoparticule de point quantique comprenant un coeur constitué d'un premier matériau et une couche constituée d'un deuxième matériau, dans laquelle le premier matériau est un matériau semi-conducteur incorporant des ions du Groupe 13 et du Groupe 15 du Tableau Périodique, et le deuxième matériau est un matériau oxyde métallique incorporant des ions métalliques choisis dans le Groupe 12 du Tableau Périodique.

2. Nanoparticule de point quantique selon la revendication 1, dans laquelle le métal du Groupe 12 est choisi dans l'ensemble constitué par le zinc, le cadmium et le mercure.

3. Nanoparticule de point quantique selon la revendication 1 ou 2, dans laquelle les ions du Groupe 13 incorporés dans le matériau semi-conducteur sont choisis dans l'ensemble constitué par le bore, l'aluminium, le gallium et indium, et/ou les ions du Groupe 15 incorporés dans le matériau semi-conducteur sont choisis dans l'ensemble constitué par le phosphure, l'arséniure et le nitrure.

4. Nanoparticule de point quantique selon l'une quelconque des revendications précédentes, dans laquelle la couche constituée du deuxième matériau est déposée sur le coeur constitué du premier matériau.

5. Nanoparticule de point quantique selon l'une quelconque des revendications 1 à 3, dans laquelle une autre couche constituée d'un troisième matériau est disposée entre le coeur de nanoparticule constitué du premier matériau et la couche constituée du deuxième matériau, le troisième matériau étant de préférence un matériau semi-conducteur incorporant des ions choisis parmi au moins l'un des Groupes 2 à 16 du Tableau Périodique.

6. Procédé pour produire une nanoparticule de point quantique comprenant un coeur constitué d'un premier matériau et une couche constituée d'un deuxième matériau, dans lequel le premier matériau est un matériau semi-conducteur incorporant des ions du Groupe 13 et du Groupe 15 du Tableau Périodique et le deuxième matériau est un matériau oxyde métallique incorporant des ions métalliques choisis dans le Groupe 12 du Tableau Périodique, le procédé comprenant la formation dudit coeur constitué dudit premier matériau et la formation de la couche constituée dudit deuxième matériau.

7. Procédé selon la revendication 6, dans lequel la formation dudit coeur comprend la mise en oeuvre de la conversion d'une composition de précurseur de coeur de nanoparticule en le matériau du coeur de nanoparticule.

8. Procédé selon la revendication 7, dans lequel ladite composition de précurseur de coeur de nanoparticule comprend des première et deuxième espèces de précurseur de coeur contenant les ions devant être incorporés dans le coeur de nanoparticule en croissance.

9. Procédé selon la revendication 8, dans lequel lesdites première et deuxième espèces de précurseur de coeur sont des entités séparées contenues dans ladite composition de précurseur de coeur, et ladite conversion est effectuée en présence d'un composé d'agrégat moléculaire dans des conditions permettant l'ensemencement et la croissance du coeur de nanoparticule, ou bien lesdites première et deuxième espèces de précurseur de coeur sont combinées en une seule entité contenue dans ladite composition de précurseur de coeur.

10. Procédé selon l'une quelconque des revendications 6 à 9, dans lequel la formation de la couche constituée du deuxième matériau comprend la mise en oeuvre d'une conversion d'une composition de précurseur de deuxième matériau en ledit deuxième matériau.

11. Procédé selon la revendication 10, dans lequel la composition de précurseur de deuxième matériau comprend les ions métalliques et les ions oxyde devant être incorporés dans la couche constituée du deuxième matériau.

12. Procédé selon la revendication 11, dans lequel les ions métalliques et les ions oxyde sont des entités séparées contenues dans la composition de précurseur de deuxième matériau, ou bien les ions métalliques et les ions oxyde sont combinés en une seule entité contenue dans la composition de précurseur de deuxième matériau.

13. Procédé selon l'une quelconque des revendications 10 à 12, dans lequel la composition de précurseur de deuxième matériau contient un composé carboxylate métallique comprenant des ions métalliques devant être incorporés dans la couche constituée du matériau oxyde métallique et ladite conversion comprend la réaction dudit composé carboxylate métallique avec un composé alcool.

14. Procédé selon la revendication 13, dans lequel le fragment carboxylate dudit composé carboxylate métallique comprend 2 à 6 atomes de carbone, ou bien ledit composé carboxylate métallique est un composé acétate métallique.

15. Procédé selon la revendication 13 ou 14, dans lequel ledit alcool est un composé alcool linéaire ou ramifié en C₆ à C₂₄.

16. Procédé selon l'une quelconque des revendications 13 à 15, dans lequel ladite réaction du composé carboxylate métallique et de l'alcool engendre ledit matériau oxyde métallique qui est compris dans ladite couche de nanoparticule.

17. Procédé selon l'une quelconque des revendications 13 à 16, dans lequel la composition de précurseur d'oxyde métallique comprend des ions oxyde devant être incorporés dans la couche constituée de l'oxyde métallique, et lesdits ions oxyde dérivent d'une source autre que ledit composé carboxylate métallique ou bien lesdits ions oxyde dérivent dudit composé carboxylate métallique.
